Europäisches Patentamt

(19) European Patent Office　　(11) Publication number: **0 024 233**
Office européen des brevets　　　　　　　　　　　　　　　**B1**

(12) **EUROPEAN PATENT SPECIFICATION**

(45) Date of publication of patent specification: **05.12.84**　　(51) Int. Cl.³: **F 02 D 5/02**

(21) Application number: **80401145.0**

(22) Date of filing: **01.08.80**

(54) **Sequential fuel injection system with overlapping injector actuation.**

(30) Priority: **13.08.79 US 66126**

(43) Date of publication of application:
**25.02.81 Bulletin 81/08**

(45) Publication of the grant of the patent:
**05.12.84 Bulletin 84/49**

(84) Designated Contracting States:
**DE FR GB IT**

(56) References cited:
**FR-A-1 598 120**
**FR-A-2 189 637**
**FR-A-2 304 783**
**FR-A-2 369 420**
**US-A-3 964 443**

(73) Proprietor: **THE BENDIX CORPORATION**
**Executive Offices Bendix Center**
**Southfield Michigan 48037 (US)**

(72) Inventor: **Drellishak, Glen Joseph**
**53416 Bellamine Dr.**
**Rochester MI 48063 (US)**
Inventor: **Carp, Ralph Wolf**
**90 Huxley Place**
**Newport News VA 23606 (US)**
Inventor: **Weber, Robert Edwin**
**978 Lacon Drive**
**Newport News VA 23602 (US)**
Inventor: **Wright, Danny Orlen**
**411 Dare Road**
**Grafton Virginia 23692 (US)**
Inventor: **Weissler II, Harold Edward**
**966 Lacon Drive**
**Newport News VA 23602 (US)**

(74) Representative: **Maguet, André et al**
**Service Brevets Bendix 44, Rue François 1er**
**F-75008 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a sequential fuel injection system with overlapping injector actuation for injecting fuel into an internal combustion engine at multiple ingestion points corresponding to the intake valves of the cylinders, said system comprising: a plurality of fuel injectors, each located proximately to the intake valve of an associated cylinder, said injectors being actuated sequentially in the firing order of cylinder ignition to supply fuel to the engine; a plurality of driver circuits for actuating the fuel injectors in response to pulse width signals indicating the duration of the actuation of each injector; and means for generating the pulse width signals for the driver circuits.

Electronic fuel injection systems for regulating the air/fuel ratio of an internal combustion engine based upon the time energization of a solenoid operated valve are well known in the art. Fuel is metered to the engine by opening a plurality of the solenoid valves with an electronic metering signal in such a manner that the duration of the opening and hence fuel flow is dependent upon the instantaneous operating parameters of the engine. The metering signal is electrically calculated from the stored schedule of an electronic control unit by sensing the operating parameters and accurately describes the fuel requirements of the engine at that instant. These systems provide the precise control of air/fuel ratio needed to produce the maximum fuel efficiency, best driveability and highest reduction in exhaust gas emissions that are attainable today.

These fuel injection systems are generally embodied as either single injector systems injecting into the ingested air flow of a throttle bore in an intake manifold and termed single point systems, or multipoint systems where every individual cylinder has an associated injection valve for the supply of fuel. Generally, single point systems while being relatively less expensive than multipoint systems are also somewhat less precise.

Although the requirements of the engine are more closely matched by multipoint systems, the phasing of multipoint injectors is quite complicated and adds complexity and cost to electronic control unit circuitry. Two of the more common phasing techniques used to open the fuel injectors and control the amount of injected fuel in a multipoint system are the sequential mode and the group mode.

In group mode, individual injectors are paralleled in groups and the firing or energization of each group is phased to a particular engine operating event in the operating cycle. One technique for an eight cylinder engine is to divide the cylinders into two groups or four and alternatively energize the groups every 180° of crankshaft rotation. Thus, each group is fired twice every two engine revolutions or four cycles. An alternative technique for two group injection is to fire both groups simultaneously every 360° of crankshaft rotation such that each group is again fired twice every four cycles.

The group method of injection has as an advantage the utilization of common circuits, such as injector driver circuits, by more than one injector. Thus, a more accurate but consequently expensive driver circuit may be used for each injector group to provide a precise opening and closing time more nearly matching the electronic metering signal to the mechanical operation of the injectors. A major disadvantage of the group method, however, is that the fuel is not exactly input at the most advantageous time and amount for every combustion event.

Further precision in a multipoint system can be obtained by sequential operation. In a sequential operation each injector is actuated seriatim in the firing order of its corresponding cylinder. Since a calculated amount of fuel for each combustion event is supplied at the most opportune time, the control of air/fuel ratio is increased.

However, timing and phasing problems are prevalent in sequential systems. One significant problem is sizing the pulse widths of the actuating signals. A lower limit is placed on pulse width by the linear operational range of the injectors and an upper limit by the time available for injection. In sequential operation, the time available between successive cylinder events decreases with the number of cylinders present. For example, an eight cylinder engine requires an injection every 90° of engine crankshaft revolution while a four cylinder engine needs only be injected every 180°. At high speeds for multiple cylinder engines the pulse width needed to inject the amount of the fuel calculated by the electronic control unit rapidly exceeds the time available for injection between sequential cylinder events.

Thus, it would be highly advantageous in a sequential system to provide overlapping injection actuation whereby an injection could be started for one injector and finish subsequent to the initiation of the next or successive injector openings. This pulse overlapping would allow long pulse widths and sufficient fuel to be injected at high engine revolutions where the requirements for extra power are critical.

For individual injector phasing it is highly desirable to begin the fuel injection at some angular event prior to the top dead center (TDC) position beginning the intake stroke. However, the injection should be finished by the time the intake valve closes to produce maximum fuel flow into the cylinder. Thus, it is advantageous to inject for time periods longer than one cycle but for less than one engine revolution in a four cycle internal combustion engine. Shorter periods unduly limit actuation pulse width and longer periods may overlap the intake strokes of adjacent cylinders. An optimal injection period is to begin injection during the exhaust stroke and finish before the end of the intake stroke of an individual cylinder.

The accuracy of the injection for an internal combustion engine can also be made more exact by basing each individual pulse width on the instantaneous operating parameters of the engine at the time of injector actuation. This will provide an immediate update of the pulse width for every combustion event, rather than having to wait for some portion of the sequencing cycle to recalculate pulse width. A much more precise air/fuel ratio and smoother engine operation will result from such a system.

In many electronic fuel injection systems, normal provision is made for special condition features such as acceleration and starting enrichment. Some systems combine a number of auxiliary pulses with the main fuel pulse or stretch the main pulses based upon acceleration demands. Moreover, in at least one prior art system, starting or cranking pulses are generated for combination with main fuel pulses.

In the instances where auxiliary pulses are used, the acceleration enrichment and cranking pulses are usually variable with respect to frequency and duration as a function of different parameters. For example, acceleration enrichment pulses are generally engine temperature dependent as to duration and are further generated at a frequency dependent on the desired acceleration. The cranking pulses in the system are engine RPM dependent as to frequency and have a duration which is a function of engine temperature. The generation of these auxiliary pulses is advantageous because they are a facile and accurate way of providing signals representative of the special conditions. The auxiliary pulses are, however, difficult to combine with the main pulse width signals of a sequential system without the loss of enrichment during pulse overlaps. It would be highly desirable in a sequential system to provide acceleration and starting enrichment features without losing enrichment during pulse overlap.

FR—A—2,189,637 teaches a sequential fuel injection system having an inhibiting control operative for deceleration for reducing the flow of fuel to the cylinders. Other features such as the plurality of injectors, a driver for each injector, pulse width generating means and sequential control means are well known. In a similar manner US—A—3,964,443 contains all of the above well known elements. The present invention teaches the use of an injector driver for every two injectors where one of the injectors is operational on the first 180° of the crankshaft and the other is operational on the second 180° of the crankshaft. To this improvement we teach the addition of enrichment pulses to pulse width pulses from the pulse generator and allow such pulse to extend for a time that is greater than the time between successive injector operations. In addition we provide a control preventing flooding of the engine during deceleration by controlling the pulse transmission line without affecting the pulse width generators.

The invention provides a sequential fuel injection system with overlapping injector actuation. The sequential injection permits a more precise control of air/fuel ratio to individual cylinders of the internal combustion engine than has heretofore been attempted. The overlapping pulses ensure that sufficient fuel with adequate control can be supplied to the individual cylinders even at high engine revolutions.

According to the invention there is provided a sequential fuel injection system with overlapping injector operation for injecting fuel into an internal combustion engine at multiple ingestion points, said system comprising: a plurality of fuel injectors each located proximately to the intake valve of an associated cylinder and, being operated sequentially in the firing order of cylinder ignition to supply fuel to the engine; means responsive to engine revolutions for generating injecting timing signals; a plurality of driver circuits for operating the fuel injectors in response to pulse width signals indicating the duration of the operation of each injector; means responsive to the injecting timing signals for generating the pulse width signals for the driver circuits including a plurality of pulse generators, one for each driver circuit, said pulse generators generating the pulse width signals in a repetitive sequence at a frequency dependent upon the operating speed of the engine and synchronously with the injecting timing signals; and means responsive to the injecting timing signals for generating selection signals in the repetitive sequence such that each selection signal has a time period equal to the time of one engine revolution for alternatively enabling the injectors of a respective pair of injectors for successive repetitive sequences; characterized in that each of the driver circuits is adapted to alternatively actuate either of the pair of the fuel injectors in response, on the one hand, to the respective pulse width signal and, on the other hand to the respective selection signals indicating which injector of the pair is to be actuated for a maximum time period equal to one engine revolution; in that there are provided means for generating an acceleration enrichment signal indicative of a desired acceleration or a starting enrichment signal indicative of the starting condition of the engine, means responsive to the injecting timing signals for adding either of said enrichment signals with the pulse width signals generating an enriched pulse width signal for increasing fuel flow from the injectors during the desired acceleration or starting condition; such means also generating a clear signal indicating that the engine is flooded, and a plurality of gating elements, being positioned between an individual pulse generator and the corresponding driver circuit for transmitting undiminished the respective pulse width signals including the enriched pulse width signal to the driver circuit while said gating element is enabled, such that each fuel injector of each driver circuit is enabled beginning with the respective pulse width signal or enriched pulse width signal and selection signal allowing its actuation time to be extendable to a maximum time equivalent to its selection signal thus overlapping succeeding pulse width signals, and the plurality of gating elements being commonly disabled by the clear signal.

The driver circuits are gated with pulse width actuation signals under the timed control of reset signals from the sequence control circuit in a predetermined order. First one group of injectors and then the other is actuated in the order or sequence and at a rate dependent upon the RPM of the internal combustion engine. Because the injectors are grouped a full sequential actuation for all the injectors can be established with two ordered actuation cycles. Preferably, one full sequencing cycle for all cylinders is accomplished every two engine revolutions for a four cycle engine.

The injectors of each pair are alternatively enabled by a bilevel selection signal from the sequence control circuit which permits an individual injector to be energized for a period of up to one full engine revolution. The selection enabling for each injector is initiated at the beginning of its pulse width signal and extends for a time equivalent to one half of the sequencing cycle. Thus, each individual injector is enabled at the time of its actuation in the sequencing cycle and for a duration which lasts until the other member of its pair is actuated.

With this technique of sequence control long overlapping pulses can be transmitted to the multiple individual injectors in sequence. The pulses may extend for the optimal available time for injection or up to one full engine revolution. Preferably, actuation begins during the exhaust stroke of an individual cylinder and is finished by the time the corresponding intake valve closes. Advantageously, in an eight cylinder engine this can be accomplished with four dual injector driver circuits and the sequencing control for a substantial reduction in amount and complexity of the circuitry.

Another aspect of the invention provides each dual injector driver circuit with a corresponding independent pulse generator that generates the pulse width signal to its driver circuit independently of the other pulse generators. In this manner every pulse width is calculated at the time of individual injector actuation to be a representation of the operating parameters of the engine at that instant.

In the preferred embodiment each pulse generator calculates the pulse width duration by the time it takes a ramp signal to traverse from an initiating level to a terminating level. A function generator generates the initiating level as a function of engine speed, the ramp signal as a function of special condition calibrations, and the terminating level as a function of the absolute pressure in the intake manifold of the engine.

These three common signals are continuously supplied to all of the pulse generators such that when a reset signal from the sequence control circuit is applied to an individual generator it will sample the instantaneous value of the signals to produce an independent pulse. A further advantage is that a basic speed density calculation is precisely formed by having all the sequential pulses terminated by the instantaneous manifold absolute pressure level.

Another feature of the invention combines the sequential pulse width signals from the pulse generators with auxiliary pulses based upon the needs of the internal combustion engine during acceleration and starting conditions. The combination is accomplished without losing any enrichment information during pulse overlap.

The duration of the auxiliary pulses is preferably engine parameter dependent with both the acceleration enrichment pulses and the starting pulses being implemented as engine temperature dependent. The frequency of the acceleration enrichment pulses is acceleration dependent and the frequency of the starting pulses is engine RPM dependent. In the preferred implementation, the starting and acceleration enrichment pulses are generated by the function generator by sensing the engine operating parameters.

The auxiliary pulses are added to the beginning of the sequential pulses by inhibiting pulse generation during their presence for the time period between two pulse generations. If the auxiliary pulse is longer than this time the next pulse in the sequence is inhibited and so on until the auxiliary pulse or pulses terminate. By this means acceleration enrichment pulses and starting pulses are sequenced to the cylinder presently being fired and enrichment pulses are not lost.

This is an important feature that develops smoother and more responsive accelerations when receiving acceleration enrichment pulses. This feature further aids cold starting as the starting pulses are evenly distributed to all cylinders at the time of cylinder ignition, thereby alleviating condensation and maldistribution problems.

Still another feature of the invention is utilized to blank injector operation if a flooding condition of the internal combustion engine is sensed. In a preferred implementation a gating element is interposed between each pulse generator and driver circuit. A common disabling line is connected to the gating elements to blank pulse width signals to the driver circuits during the presence of a clear signal from the function generator representing a flooded engine. The clear signal is generated during the logical coincidence of a start or cranking condition and wide open throttle condition.

One way of carrying out the invention is described in detail below with reference to the drawings which illustrate or relate to one specific embodiment, in which:

Figure 1A is a system block diagram of an electronic sequential fuel injection system constructed in accordance with the invention;

Figure 1B is a detailed system block diagram of the electronic control unit for the fuel injection system illustrated in Figure 1A;

Figure 2 is a detailed electrical schematic diagram of a pulse generator circuit for the electronic control unit as illustrated in Figure 1B;

Figure 3 is a detailed electrical schematic diagram of a dual injector driver circuit for the electronic control unit illustrated in Figure 1B;

Figure 4 is a detailed electrical schematic diagram of the sequence control circuit of the electronic control unit illustrated in Figure 1B; and

Figure 5 is a waveform timing diagram of the various control signals at the indicated locations in the detailed system block diagram of the electronic control unit illustrated in Figure 1B.

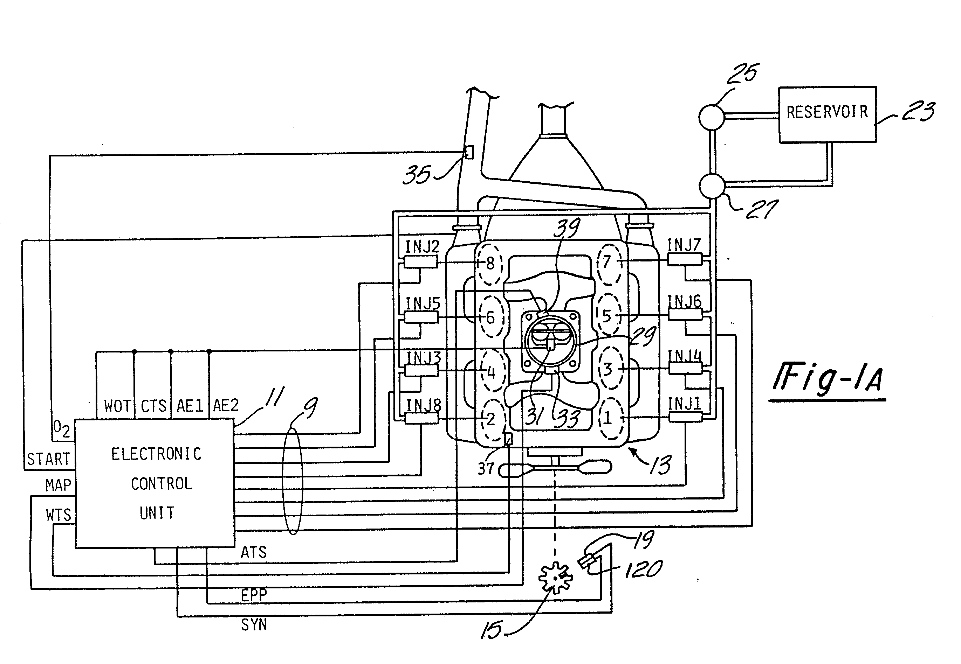

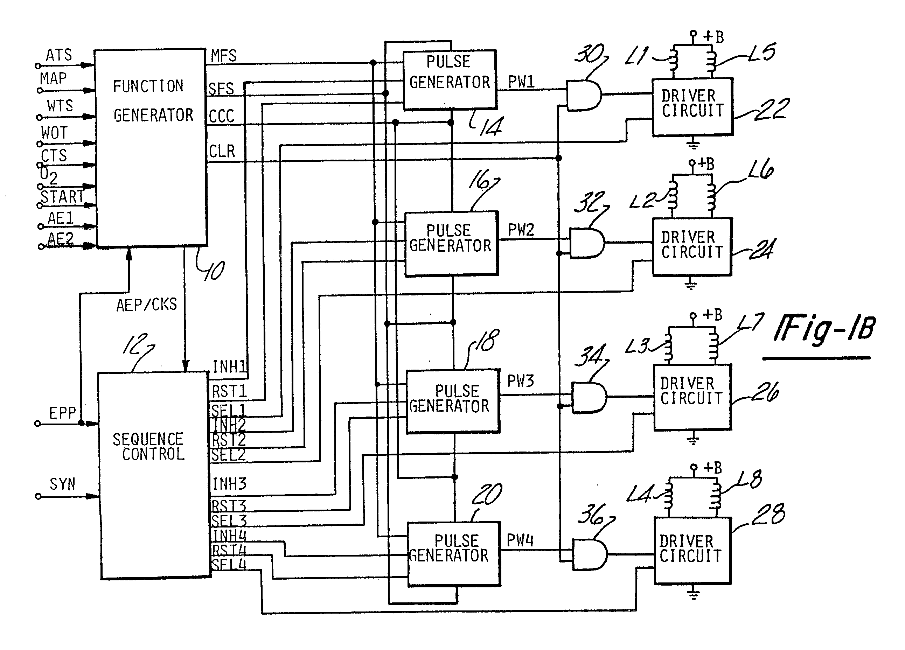

In Figure 1A, an electronic multipoint fuel injection system having sequential injector actuation is illustrated. An electronic control unit 11 samples the instantaneous operating parameters of an internal combustion engine 13 and provides electrical pulse width metering signals via bus 9 to operate solenoid injector valves INJ1—INJ8 in sequential order. By opening each valve for the duration of its metering signal, measured amounts of pressurized fuel are injected in proximity to the intake valves of the individual cylinders 1—8 of the engine. The injected fuel mixes with the air ingested intot he intake manifold of the engine and is combusted to power the engine.

The pressurized fuel is delivered to the injectors from a fuel rail fed by a pressure regulator 27 and a fuel pump 25. The pump 25 and regulator 27 form a recirculation loop to circulate the fuel input from a reservoir 23 to the fuel rail and excess back to the reservoir.

The injectors are actuated by the electronic control unit (ECU) sequentially, starting with INJ1 and finishing one full injection sequence or two engine revolutions later at INJ8. In the configuration shown it is seen that actuation occurs in the firing order of the engine conventionally in cylinder order 1-8-4-3-6-5-7-2.

The actuation time of an injector is scheduled by the electronic control unit as a pulse duration calculated from the engine operating parameters. Preferably, the electronic control unit schedules the pulse durations from sampling the operating parameters by means of a plurality of electrical analog sensors. Conventionally, these sensors generate signals to the ECU representative of the physical parameters being sensed and are located at various engine locations.

In the implementation illustrated, a pressure sensor 33 is utilized to develop a signal MAP representative of the absolute pressure in the intake manifold of the engine. A throttle position sensor 31, located on a throttle body 29 regulating the air flow into the intake manifold, develops signals indicating the position of the throttle at certain special conditions. The special conditions are when the throttle is wide open, a WOT signal, and when the throttle is in a closed position, a CTS signal. Further acceleration enrichment signals are developed by sensor 31 from the rate of angular changes in position of the throttle blades and are applied to the ECU as signals AE1 and AE2.

Additionally, a signal WTS indicative of the engine coolant temperature is provided by a temperature sensor 37 located in the water jacket of the cylinder heads. A temperature sensor 39 located in the path of the incoming air flow in the throttle body 29 is used to generate an air temperature signal ATS. The electronic control unit additionally receives a signal START from the starting motor solenoid of the internal combustion engine indicating a starting or a cranking condition.

A closed loop correctional control for the electronic control unit utilizes an oxygen sensor 35 positioned in the exhaust manifold of the internal combustion engine to sense the constituent composition of the exhaust gas and deliver a bilevel signal $O_2$.

An engine position sensor comprising a rotating member 15 and two sensors 19 and 120 which may be Hall effect devices provide timing and injection triggering signals to the ECU. The rotating element 15 is rotationally coupled to the engine to turn in unison with the camshaft and thus completes one full revolution every four cycles or two revolutions of the engine. The rotating member 15 includes a plurality of similar sensible elements spaced equally about the circumference of the member and at least one dissimilar sensible element. Since the example illustrates an eight cylinder engine, a like sensible element representing an individual combustion event is provided for each cylinder. The sensible elements in cooperation with sensors 19 and 120 produce a synchronization pulse SYN once every two engine revolutions and a series of position pulses EPP at a rate dependent upon engine speed.

Specifically, in the eight cylinder internal combustion engine shown as an example, the similar sensible elements on the rotating member 15 will provide an EPP signal once every 90° of engine crankshaft rotation and the dissimilar element a SYN signal between two selected cylinder events every 720° of the crankshaft rotation. Preferably, the rotating member is configured such that the SYN signal occurs between cylinder events for cylinders 2-1, and the successive EPP signal occurs at some predetermined angle before TDC on the intake stroke of cylinder 1. The number of degrees offset from TDC will be determined by the maximum pulse width length desired from the injector and can be up to 90° maximum. Configured thusly the SYN signal will initiate a sequencing cycle for the system and the EPP signals will provide synchronization pulses for the beginning of each actuation for injectors INJ1—INJ8.

A functional system block diagram for the ECU 11 of the sequential fuel injection system incorporating the invention is illustrated in Figure 1B. The ECU 11 comprises a function generator 10 and a sequence control circuit 12 which control a plurality of independent pulse generators 14, 16, 18, 20 and a plurality of dual injector driver circuits 22, 24, 26, 28. The function generator 10 outputs a plurality of common signals based on functions of the operating parameters and special conditions of the engine while the sequence control circuit 12 regulates the timing and sequencing of injector actuation. The pulse generators 14, 16, 18, 20 are each associated with a particular driver circuit 22, 24, 26, 28 by the electrical coupling of their outputs through gating devices such as AND gates 30, 32, 34, 36, respectively. The pulse width generators 14, 16, 18, 20 calculate independent pulse width signals PW1—PW4 that energize the driver circuits 22, 24, 26, 28 and control inductive load coils L1—L8. The inductances or coils shown schematically are representative of the electrical components of a plurality of solenoid operated fuel injection valves of conventional design. Such injector valves upon energization of their coils will be actuated to meter fuel and upon deenergization will close to terminate fuel flow.

The inductive load coils L1—L8 are partitioned into two groups L1—L4 and L5—L8 respectively and one coil from each group is assigned to a driver circuit. Each coil is commonly connected to the battery voltage +B at one terminal and is energized by controlling the impedance between its other terminal and ground with the driver circuits. Injector coils L1—L8 correspond to the electrical portion of fuel injectors INJ1—INJ8 respectively shown in Figure 1A.

Each driver circuit, for example driver circuit 22, operably controls the current through the coils L1, L5 of two solenoid injector valves. Only one coil or injector of each driver circuit is selected for energization at a time. Which injector is selected is determined by a bilevel signal SEL1 input to the driver circuit from the sequence control circuit 12. The length of the actuation of the solenoid injector valve during this enablement is controlled by a pulse width signal PW1 applied to the AND gate 30. A common disabling signal CLR from function generator 10, will blank the transmission of the pulse width signal PW1 when it is in a low state. The other driver circuits 24, 26, 28 operate similarly with signals PW2—PW4 providing actuation duration and signals SEL2—SEL4 selection information. The CLR signal will disable all injector actuation pulses through gates 32, 34, 36 to blank the pulse width signals PW2—PW4 during engine flooding conditions.

Each pulse generator 14, 16, 18, 20 generates an independent variable length pulse by sampling the signals from three common lines of function generator 10. The signals represent an initiating voltage level SFS, a controlled current signal CCC representative of a ramp rate, and a termination voltage level MFS. To begin each pulse width, the pulse generators receive reset signal pulses RST1—RST4 respectively from the sequential control circuit 12. Upon receiving the reset signals, the pulse generators 14, 16, 18, 20 calculate the pulse width signals PW1—PW4 from the common signals independently of each other. The sequence control circuit also generates inhibit signals INH1—INH4 to the pulse generators 14, 16, 18, 20 to stretch the pulse lengths with auxiliary pulses for the time between two engine position pulses or actuations.

The sequence control circuit 12 generates the timing and control signals RST1—RST4, INH1—INH4, and SEL1—SEL4, from the input of the EPP signal and SYN signal as will be more fully explained hereinafter. The sequence control circuit further receives the AEP/CKS signal from the function generator 10 and generates the INH1—INH4 signals therefrom.

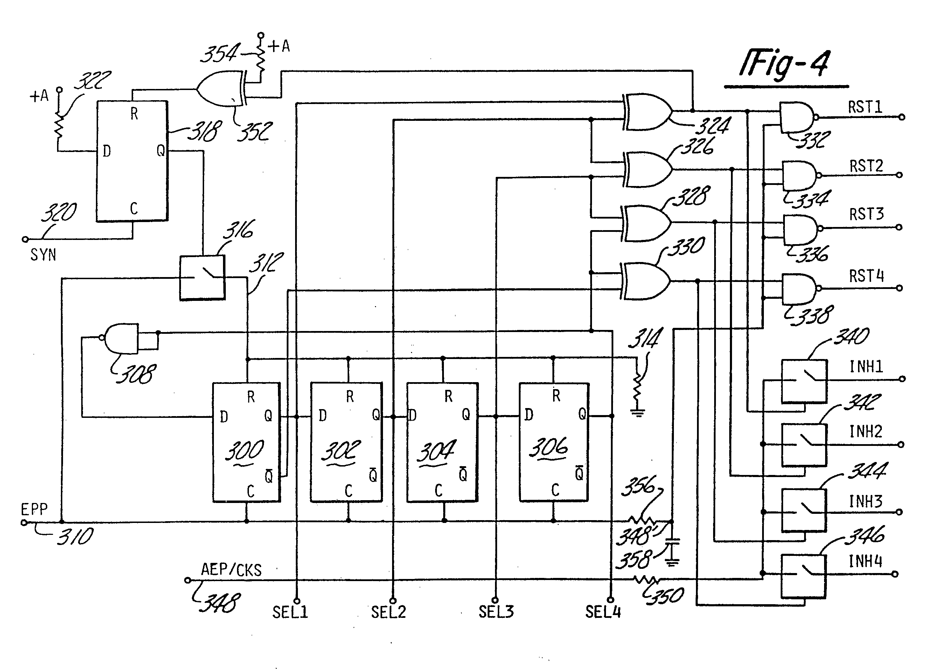

The function generator 10 receives from the engine sensors the previously described analog input signals ATS, AE1, AE2, MAP, WTS, WOT, CTS, START and $O_2$ to generate the five common control signals MFS, SFS, CCC, CLR, AEP/CKS to the pulse generators, driver circuits, and sequence control circuit. The function generator further receives a signal representative of the RPM of the engine, the EPP signal. The function generator 10 can be of conventional design and preferably is a hybrid analog and digital electronic computational circuit such as that described in US—A—4,212,066. The SFS signal, which is the initiating level of the timing measurement of each pulse generator, is preferably generated by the function generator 10 as a speed dependent signal based upon the volumetric efficiency of the engine. In this patent, a speed sensing circuit 16 generates a waveform, disclosed in Figure 3g of that reference, which is applicable to the present circuitry.

Similarly, in this patent, a pressure sensing circuit 14 can be used to generate the MFS voltage level as a function of the absolute pressure in the intake manifold of the engine. An advantageous functional relationship for the MFS signal is illustrated in Figures 5b and 5c of that reference.

Auxilliary acceleration enrichment pulses, an AEP signal, and starting or cranking pulses, a CKS signal, are available from an acceleration enrichment circuit 40 and a cold cranking function circuit 20 respectively in this patent.

An indication of the ramp rate for the timing of pulse generation can be supplied by the CCC signal. The CCC signal preferably is comprised of a current signal based upon warm up conditions and air temperature. Further, special condition calibrations for closed loop operation, wide open throttle, and altitude compensation may be added to the base calibration. The correction current combination circuit 22 in this patent may be used to generate a signal such as that described above if a current sink instead of source is used.

The CLR signal can be developed by the safety circuit 34 in this patent as a combination of logical conditions indicating a flooded condition of the engine. The coincidence of the start signal and wide open throttle condition is usually an indication of a flooded engine if the engine temperature is in the operational range. The operation of this feature permits an operator with a flooded engine the opportunity to crank the engine until the excess fuel has been exhausted.

Therefore, it is seen that the common signals of the function generator 10 can be developed by conventional circuitry such as that disclosed in US—A—4,212,066. However, other electronic computational circuits could be utilized to generate the described signals and the invention should not be limited to the specific circuitry of the reference.

Operationally, the injector actuation is sequentially controlled by the sequence control circuit 12 in the following manner. The reset signals RST1—RST4 are applied in succession to pulse generators 14, 16, 18, 20 to initiate the pulse generator signals PW1—PW4 one after the other. The reset signals are synchronized with the EPP signal pulses and thus initiate the pulse widths at individual cylinder event times as the respective sensible elements pass the magnetic sensor. The select signals SEL1—SEL4 alternatively enable each injector of an associated pair for one half of the sequencing cycle starting at the initiation of the corresponding pulse width signal PW1—PW4.

Since the sequencing cycle is two revolutions or four cycles, each injector can be energized for up to one full engine revolution according to one important aspect of the invention. When the actual termination of the actuating signals happens is, however, governed independently by the individual pulse generators when they detect the terminating level signals MFS.

Therefore, the coils L1—L4 are sequentially energized during a first half of the sequencing cycle and coils L5—L8 are sequentially energized during a second half of the sequencing cycle. Thus, by the time L5 is actuated L1 has been enabled by the select signal SEL1 for one full engine revolution. Thereafter, the SEL1 signal will alternatively enable L5 for the next engine revolution. Similarly, by the time the sequence reaches coil L6, the coil L2 has been enabled by signal SEL2 for a full engine revolution. The signal SEL2 will then enable L6 for the next engine revolution beginning with the actuation of L6 by the PW2 signal.

The inhibit feature is utilized to combine the asynchronously generated acceleration enrichment pulses, AEP, and cranking pulses, CKS, with the pulse width signals PW1—PW4. Each inhibit signal enables a respective pulse generator for pulse extension for the time between its actuation pulse and the start of the next actuation pulse in the sequence. Any auxiliary pulses from the AEP/CKS signals coincident with the enabling time inhibit the termination of the pulse width signal for the duration of these signals.

The inhibiting of the termination extends the pulse width signals by pulse width addition, thereby combining the auxiliary pulses with the main pulses in a facile manner. The addition is accomplished at the beginning of the pulse width signal so that pulses terminate with the instantaneous value of the MAP signal as has heretofore been described as desirable. This method of combination additionally sequences the auxiliary pulses to the cylinder next undergoing a combustion event.

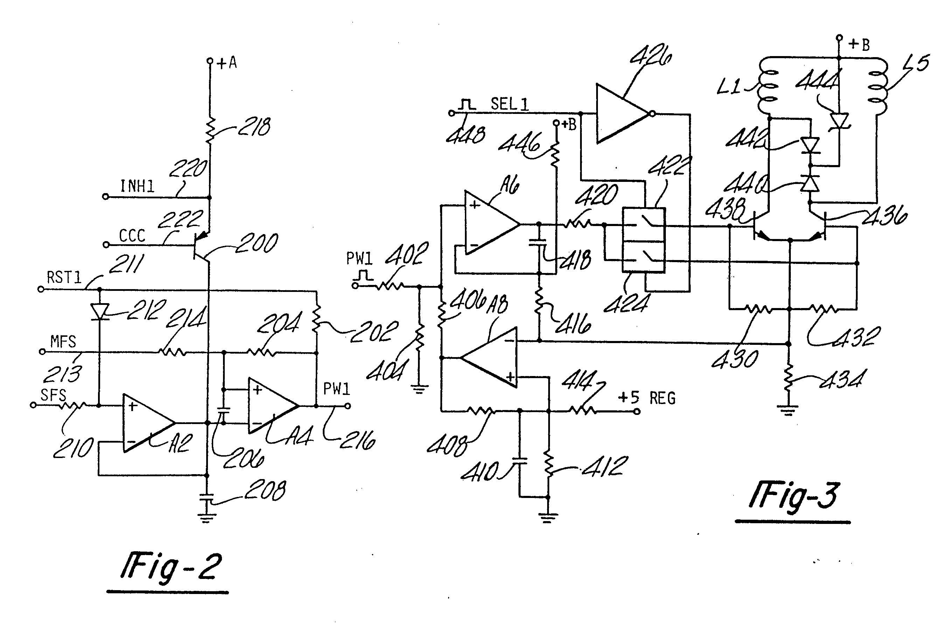

The detailed circuitry comprising one of the independent pulse generators, pulse generator 14, will now be more fully described with reference to Figure 2. The remaining pulse generators 16, 18, 20 consist of identical circuitry and function in the same manner as does generator 14. Therefore, the details of these remaining circuits will not be discussed further as the operation of each in view of the following discussion will be obvious to one skilled in the art.

The pulse generator 14 includes an amplifier A4 acting as a comparator which outputs the pulse width signal PW1 via output line 216. The pulse width signal PW1 is one of two logical events depending upon the state of the comparator and of a duration calculated by the circuit. The circuit performs the calculation by sampling the three common signals SFS, MFS and CCC derived from the function generator 10.

The comparator amplifier A4 has connected at its inverting input a timing capacitor 208 that develops a voltage between that input and ground for comparison to the noninverting input. The MFS signal is received at the noninverting input of the comparator A4 through resistor 214 from terminal line 213. Further included in the comparator circuit is a latching resistor 204 connected between the noninverting input and the output of the amplifier A4 and a filter capacitor 206 coupled between the inputs. The amplifier A4 has an uncommitted collector with a pull-up resistor 202 connected between the output of the comparator and the voltage provided on a reset line 211.

A voltage follower, comprising an amplifier A2 and associated circuitry, is provided to discharge the capacitor 208. The voltage follower is coupled by the output terminal of amplifier A2 to the inverting input of the comparator A4 and hence a discharge terminal of timing capacitor 208. Feedback for the voltage follower is provided by coupling the output of the amplifier A2 back to its inverting input such that the voltage on capacitor 208 is measured. The initiating voltage SFS is applied to the noninverting input of the amplifier A2 via the input resistor 210. Amplifier A2 has an uncommitted collector output and can only discharge the capacitor 208. A discharge path to ground will be completed whenever the voltage on the capacitor is greater than the voltage on the noninverting input of the amplifier A2. Normally, a high level on the reset line 211 applied to the noninverting input of amplifier A2 via blocking diode 212 will cause the amplifier A2 to be nonconducting.

The reset line 211 receives the RST1 signal from the sequence control circuit 12 and delivers a grounding pulse to the amplifiers A2 and A4. The reset pulse triggers the initiation of the pulse width signal and is coupled to the noninverting input of amplifier A2 and the output of comparator A4 via the diode 212 and a resistor 202, respectively.

A current controlled current source comprising a PNP transistor 200 is connected at its collector to the timing capacitor 208 and at its emitter to a source of positive voltage +A through a resistor 218. The current source is controlled by applying the CCC signal to the base of transistor 200 via terminal lead 222. By sinking a controlled amount of current from the base of transistor 200, the CCC signal will cause a controlled amount of current to be supplied through the emitter-to-collector junction of the transistor 200 to the capacitor 208.

Additionally applied to the emitter of the transistor 200 is the inhibit signal INH1 via terminal lead 220. The inhibit signal represents its presence by a ground level and its absence by an ungrounded level. When the INH1 signal transitions to a ground level, current will be inhibited from flowing through the emitter-to-collector junction of the transistor 200 and the capacitor 208 will not charge. Conversely, when the inhibit signal INH1 is not grounding the lead 220 the source will normally supply current to the capacitor under the control of the CCC signal.

Operationally, the pulse generator 14 is a variable duration monostable multivibrator with a stable and unstable state. In its stable state the monostable produces a low level output from comparator A4 because capacitor 208 has been charged to the voltage +A through transistor 200. The grounding of the reset line 211 with the RST1 signal pulse initiates the generation of the pulse width signal PW1 by triggering the monostable into an unstable state. During the short presence of the reset pulse, the diode 212 is back biased allowing capacitor 208 to be discharged through the voltage follower amplifier A2 to the lower SFS voltage level. Additionally, the output of comparator A4 is held in a low state because there is no voltage applied to the pull up resistor 202.

When the signal RST1 returns to a high level at the end of the reset pulse the output of comparator A4 transitions to a positive level because the MFS level is greater than the SFS level. This transition is the leading edge of the signal PW1. The capacitor 208 will start to charge at a ramp rate controlled by the amount of current supplied by the transistor 200. The comparator amplifier A4 continuously compares the voltage on capacitor 208 to the MFS signal. At the instant that the voltage on capacitor 208 exceeds the terminating level or MFS signal, the comparator amplifier A4 will switch to a low state which is the falling edge of the PW1 signal.

It is seen that if the inhibit signal INH1 is held low or at a ground potential after the occurrence of a reset pulse, the pulse width signal PW1 will be extended for the duration of that ground level signal. No current will be supplied by the transistor 200 and capacitor 208 will remain at the SFS voltage level or the potential established at the initiation of the INH1 signal. When the INH1 signal is terminated the pulse generator will be released and thereafter finishes calculation of the pulse based upon the operating parameters of the engine in existence at that time. Acceleration enrichment pulses or starting pulses are steered sequentially to this circuit to extend the pulse width signals PW1—PW4 without the loss of overlapping auxiliary pulses.

The operation and detailed circuit structure of one dual injector driver circuit, driver circuit 22, will now be more fully explained with reference to Figure 3. The remaining driver circuits 24, 26, 28 consist of identical circuitry and function in the same manner as driver circuit 22. Therefore, the details of these remaining circuits will not be discussed further as the operation of each, in view of the following discussion, will be obvious to one skilled in the art. The driver circuit 22 controls the current through the coils of the solenoid injectors to allow an equalization of the closing and opening times and to match the actual mechanical injector operation to the electrical signals from the pulse generators.

The driver circuit includes a pair of bilateral analog switches 422, 424, which are operated by a control line 448 receiving the select signal SEL1. Switch 422 receives the select signal directly via the control line and the switch 424 receives the logical signal subsequent to an inversion by an inverter 426.

Depending on the logic level of the select signal the switches will alternatively couple the output signal from a driver amplifier A6 via resistor 420 to the base terminals of NPN drive transistors 436 and 438. The driver amplifier signal will regulate the conductance of the transistors to control the current flowing through coils L1, L5.

The drive transistors 436 and 438 are coupled at their collectors to the separate coils L1 and L5 respectively. The emitters of the two drive transistors are commonly connected to a sense resistor 434 whose other terminal is connected to ground. A sense line connects the junction of the emitters of the drive transistors and sense resistor to the inverting input of a comparator amplifier A8.

Each collector of the drive transistors further includes diode 440, 442 respectively connected by its anode thereto. The cathodes of diodes 440, 442 are coupled to a common point which forms a junction for the connection of the cathode of a Zener diode 444. The other terminal of Zener diode 444 is connected to the battery voltage +B. The driver transistors 436, 438 are further provided, between their base and emitter terminals, with pull-down resistors 430 and 432 which allow the transistors to turn off when the driver amplifier signal transitions to a low level or the switches 422, 424 are opened.

The driver circuit further includes the comparator amplifier A8 for indicating when the coil current is in excess or less than a threshold. The comparator amplifier A8 receives at its noninverting input a threshold voltage from the junction of a pair of divider resistors 412 and 414 connected between a regulated +5 volts and ground. A feedback loop comprising resistor 406 and resistor 408 is provided between the noninverting input of the amplifier A6 and the noninverting input of amplifier A8. The output of the amplifier A8 is coupled to the junction at the two resistors 406 and 408.

The pulse width signal PW1 is received by the driver amplifier A6 via the junction of a pair of divider resistors 402 and 404 connected between the output of AND gate 30 and ground. The driver amplifier A6 has a regulating voltage applied to its inverting input. One part of the regulating voltage is from the serial combination of the resistors 416 and 434 connected between the inverting input to ground. Further supplying part of the regulating voltage is a resistor 446 connected between the battery voltage +B and the inverting input. The driver amplifier A6 further includes a slewing capacitor 418 connected between its output and noninverting input.

Operation of the circuit can be understood by assuming that initially the SEL1 signal is low and the PW1 signal is low. In this state, switch 424 will be closed and amplifier A6 will be conducting because of the voltage on its inverting input will be greater than the voltage on its noninverting input. Similarly, the threshold voltage developed at the noninverting input of the amplifier A8 will cause it to be nonconducting. Since driver amplifier A6 is conducting, transistor 436 will be biased off.

Assume now that the SEL1 signal becomes high and further a PW1 signal pulse is applied to the circuit. The SEL1 signal will close switch 422 and open switch 424 thereby connecting the output of the driver amplifier A6 to the base of transistor 438. The voltage of the PW1 signal pulse will be divided down by the resistor combination 402, 404 to provide a voltage at the noninverting input of amplifier A6 which is greater than the regulating voltage applied to the inverting input. A high output voltage from amplifier A6 is transmitted via resistor 420 to the transistor 438, turning it on and thereby pulling current through the serial path of the battery voltage +B, the inductor L1, the collector-to-emitter junction of transistor 438, the sense resistor 434, and ground. As current begin to build in the inductor the voltage on the sense line will increase to where it exceeds the threshold applied to the noninverting input of comparator amplifier A8.

At this point in time the comparator amplifier A8 will become conducting and ground the junction of resistors 406 and 408. The voltage applied to the noninverting input of the amplifier A6 will thus become less since the resistor 406 is now in parallel with the resistor 404. The current through the coil will be reduced to a holding level dependent upon the battery voltage +B fed back through the resistor 446. The conducting state of comparator amplifier A8 also causes the threshold voltage of the amplifier to become very small as the feedback path through the resistor 406 has now been terminated.

When the pulse width signal PW1 ends, the voltage at the noninverting input of amplifier A6 will fall below the regulating voltage and the amplifier will turn the transistor 438 off. At this time, the collapsing magnetic field in the inductor L1 will be dissipated through the forwardly biased diode 442 and the Zener diode 444 once its breakdown voltage has been exceeded. The operation of the injector having coil L5 by the transistor 436 is similar when the select signal SEL1 is low and will not be further described.

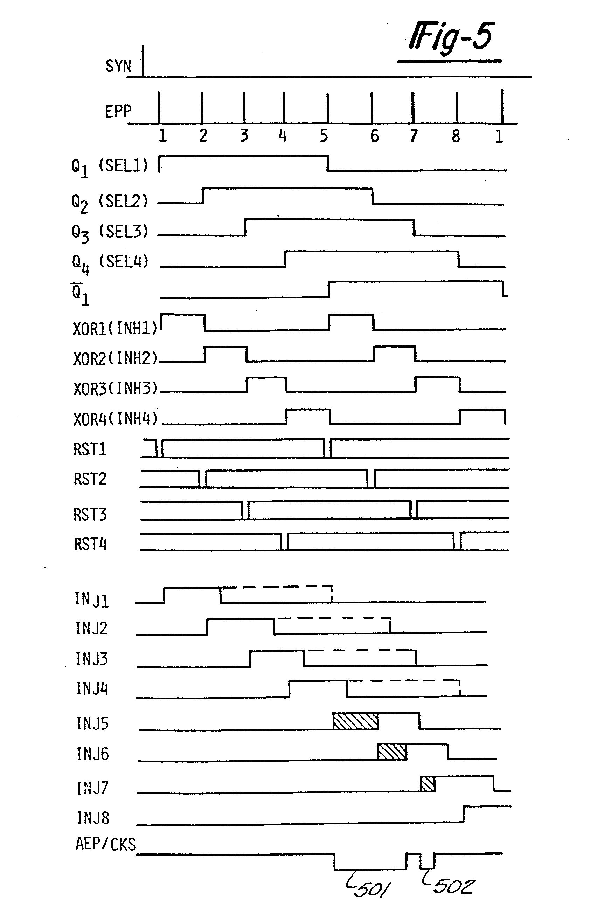

With reference now to Figure 4 there is shown the detailed circuitry for the sequence control circuit 12. In a preferred implementation the sequence control circuit comprises a shift register formed from four D-type bistable multivibrators 300, 302, 304, 306. The four stage register is connected by having the Q output of each bistable multivibrator connected to the D input of the next successive stage while the last device 306 has its Q output fed back through an inversion from NAND gate 308 to the D input of the first stage 300. The register is synchronously shifted with the EPP signal via a common clock line 310 connected to the C input of all bistable multivibrators 300, 302, 304, 306. Every EPP pulse will shift the signal presented at the D input of a stage to the Q output of that stage. The EPP pulses are delayed in their transmission to a node 348' by a resistor 356 and a capacitor 358 after they clock the shift register.

The shift register is further provided with a common reset line 312 connected to the R inputs of all stages 300, 302, 304, 306. A resistor 314 connects the common reset line 312 to ground such that a pulse applied to the line will develop a voltage across the resistor to provide a direct or DC reset to the register. The reset pulse is provided by the line 312 from an EPP signal pulse communicated through an analog switch 316 which is closed by a high output level from the Q output of a D type bistable multivibrator 318. The bistable multivibrator 318 has a positive voltage +A connected to its D input through resistor 322 and when the SYN signal pulse is applied to its C input via lead 320 this high level is transferred to the Q output to close the switch 316. The SYN signal occurs once every two engine revolutions to reset the sequence control circuit. Bistable multivibrator 318 has a direct reset applied to its R input from an exclusive OR gate 352. Inputs to gate 352 are the positive voltage +A through resistor 354 and the output of an exclusive OR gate 324.

The sequence control circuit further includes a plurality of exclusive OR gates 324, 326, 328, 330. The exclusive OR gates act as decoders of the Q outputs of the shift register stages to produce eight sequential enabling signals during the successive time periods between EPP pulses. Gate 324 decodes the Q outputs of stages 300 and 302 to provide a high signal for the time period between the EPP pulses of time periods 1 and 2 and time periods 5 and 6. Similarly, gate 326 decodes the Q outputs of stages 302 and 304 to provide the enabling signals for time periods 2 and 3 and time periods 6 and 7; gate 328 decodes the Q outputs of stages 304 and 306 for the enabling signals during time periods 3 and 4 and time periods 7 and 8; and gate 330 decodes the Q and $\overline{Q}$ outputs of stages 306 and 300 respectively for the enabling signals during time periods 4 and 5 and time periods 8 and 1.

These enabling signals from the exclusive OR gates 324, 326, 328, 330 are transmitted to a plurality of pulse steering NAND gates 332, 334, 336, 338 respectively and conjunctively to the control inputs of bilateral analog switches 340, 342, 344, 346. Each NAND gate is further connected to the clock line 310 at the node 348' such that when NAND gates 332, 334, 336, 338 are sequentially enabled by the signals from the exclusive OR gages 324, 326, 328, 330 the outputs of the gates will provide low level output pulses which are reset signals RST1—RST4. Likewise, analog switches 340, 342, 344, 346 are enabled sequentially by the enabling signals from the exclusive OR gates 324, 326, 328, 330 to transmit the inhibit signals INH1—INH4 through their contacts. The inhibit signals are generated by grounding a common line 348 via resistor 350 with the auxiliary pulses of the AEP/CKS signal.

Operation of the circuit will now be more fully explained if reference is directed to the circuitry in Figures 1B and 4 in conjunction with the corresponding waveforms in Figure 5. After each sequence of eight cylinder firings and before the first cylinder EPP pulse, the synchro pulse SYN is applied to the bistable multivibrator 318, setting the Q output and closing switch 316. On the next EPP pulse, which initiates the beginning of the next injection sequence, all register stages 300, 302, 304, 306 are reset. The first EPP pulse is delayed via the resistor 356 and capacitor 358 to thereafter clock, the zero on the output stage 306 into the first stage 300 of the register as shown by the waveform labelled Q1. A one on the Q output of the bistable multivibrator in the first stage will be fed back through the exclusive OR gate 324 and exclusive OR gate 352 to reset the bistable multivibrator 318.

Thereafter, EPP pulses will shift the high output of the first stage to the second stage and successively on to the third and fourth stages as is illustrated by waveforms Q2, Q3 and Q4. At EPP pulse 5 the Q1 output will transition to a low state because of the feedback of a one level output from the stage 306. This zero is then shifted to the successive stages during EPP pulses 6—8 until the synchro pulse again resets the system between EPP pulses 8 and 1. The cycle continues during the time EPP and SYN signals are fed to the circuit. The SEL1—SEL4 signals are generated as the output of the stages 300, 302, 304, 306 and are one engine revolution in length but sequentially offset from one another by one EPP pulse period.

Waveform XOR1—XOR4 illustrate the enabling waveforms of the decoder gates 324, 326, 328, 330. By enabling NAND gates 332, 334, 336, 338 sequentially with these signals and then by applying the EPP signals commonly to the inputs of the gates, the reset signals RST1—RST4 are generated at the coincidence of the two signals. The coincidence gates a grounding reset pulse to the correct pulse generator to initiate an actuation pulse for one of the injectors INJ1—INJ8 upon every occurrence of an EPP pulse.

It is seen from the dotted lines for INJ1—INJ4 that the actuation pulses may extend for the length of the enabling select signals SEL1—SEL4 or a full engine revolution. Thus, the pulses may overlap extensively but are independently terminated. Each select signal enables one injector of a pair with one level and the other injector of the pair with the other level for one full engine revolution.

If the AEP/CKS signal auxiliary pulses are generated as is shown in Figure 5, then they will extend the injector actuation pulses as is shown in the actuation of injectors INJ5—INJ7. The AEP/CKS signal in coincidence with one of the enabling signals XOR1—XOR4 gates the auxiliary pulses to the presently actuated injector and extends the pulse width by inhibiting the termination of the pulse as previously described. Waveforms for injectors INJ5, INJ6, and INJ7 illustrate in shaded areas of the waveforms the enrichment produced by the auxiliary pulses shown. The first auxiliary pulse 501 overlaps two injection pulses INJ5, INJ6.

During the time period between EPP pulses 5—6, the signal XOR1 enables switch 340 to extend the fuel pulse width to injector INJ5. At EPP pulse 6, the enrichment is sequenced to the next injector by signal XOR2, enabling gate 342. Enrichment pulse 502 likewise inhibits the termination of the actuation pulse to injector INJ7 during the enabling of signal XOR3 to gate 344.

## Claims

1. Sequential fuel injection system with overlapping injector operation for injecting fuel into an internal combustion engine at multiple ingestion points corresponding to the intake valves of the cylinders, said system comprising: a plurality of fuel injectors (L1—L8) each located proximately to the intake valve of an associated cylinder and being operated sequentially in the firing order of cylinder ignition to supply fuel to the engine; means (15, 19, 120) responsive to engine revolutions for generating injecting timing signals (EPP 1—8); a plurality of driver circuits (22, 24, 26, 28) for operating the fuel injectors (L1—L8) in response to pulse width signals (PW1—PW4) indicating the duration of the operation of each injector; means (14, 16, 18, 20) responsive to the injecting timing signals for generating the pulse width signals (PW1—PW4) for the driver circuits (22, 24, 26, 28) including a plurality of pulse generators (14, 16, 18, 20), one for each driver circuit, the pulse generators (14, 16, 18, 20) generating the pulse width signals (PW1—PW4) in a repetitive sequence at a frequency dependent upon the operating speed of the engine and synchronously with the injecting timing signals; and means (12, 300, 302, 304, 306) responsive to the injecting timing signals (EPP1—8) for generating selection signals (SEL1—SEL4) in the repetitive sequence such that each selection signal (SEL1—SEL4) has a time period equal to the time of one engine revolution for alternatively enabling the injectors (L1, L5; ...; L4, L8) of a respective pair of injectors (L1, L5; ...; L4, L8) for successive repetitive sequences; characterized in that each of the driver circuits (22, 24, 26, 28) is adapted to alternatively actuate either of the pair of the fuel injectors (L1, L5; ...; L4, L8) in response, on the one hand, to the respective pulse width signal (PW1—PW4) and, on the other hand to the respective selection signal (SEL1—SEL4) indicating which injector of the pair is to be actuated for a maximum time period equal to one engine revolution; in that there are provided means (10) for generating an acceleration enrichment signal (AEP) indicative of a desired acceleration or a starting enrichment signal (CKS) indicative of the starting condition of the engine, means (340, 342, 344, 346, 200) responsive to the injecting timing signals (EPP 1—8) for adding either of said enrichment signals (AEP, CKS) to the pulse width signals (PW1—PW4) generating an enriched pulse width signal for increasing fuel flow from the injectors (L1—L8) during the desired acceleration or starting condition; such means (10) also generating a clear signal (CLR) indicating that the engine is flooded, and a plurality of gating elements (30, 32, 34, 36), being positioned between an individual pulse generator (14, 16, 18, 20) and the corresponding driver circuit (22, 24, 26, 28) for transmitting undiminished the respective pulse width signals (PW1—PW4) including the enriched pulse width signal to the driver circuit (22, 24, 26, 28) while said gating element (30, 32, 34, 36) is enabled, such that each fuel injector (L1—L8) of each driver circuit (22, 24, 26, 28) is enabled beginning with the respective pulse width signal (PW1—PW4) or enriched pulse width signal and selection signal (SEL1—SEL4) allowing its actuation time to be extendable to a maximum time equivalent to its selection signal thus overlapping succeeding pulse width signals, and the plurality of said gating elements (30, 32, 34, 36) being commonly disabled by said clear signal (CLR).

2. Sequential fuel injection system as claimed in Claim 1, characterized in that the means (10) for generating the acceleration enrichment signal (AEP) or the starting enrichment signal (CKS) generates either of said signals (AEP, CKS) as a series of auxiliary enrichment pulses asynchronously with the pulse width signals (PW1—PW4).

3. Sequential fuel injection system as claimed in Claim 1, characterized in that the means (10) for generating said clear signal (CLR) is adapted to generate said clear signal (CLR) at the coincidence of a starting condition and a wide open throttle condition of the engine.

4. Sequential fuel injection system as claimed in Claim 1, characterized in that there is provided means (12; 324, 326, 328, 330; 332, 334, 336, 338) for generating a plurality of reset signal pulses (RST1—RST4) in said repetitive sequence, with each reset signal pulse (RST1—RST4) corresponding to one of the spaced engine events, and in that each pulse generator (14, 16, 18, 20) generates its respective pulse width signal (PW1—PW4) independently of all of the other pulse generators, each pulse generator (14, 16, 18, 20) initiating its respective pulse width signal (PW1—PW4) in response to one of the reset pulses (RST1—RST4) and terminating its respective generated pulse width signal (PW1—PW4) in response to signals (SFS, CCC, MFS) corresponding to measured engine operating parameters and special condition calibrations.

**Patentansprüche**

1. System für aufeinanderfolgende Kraftstoffeinspritzung mit überlappender Betätigung der Einspritzventile zum Einspritzen von Kraftstoff in eine Brennkraftmaschine bei einer Mehrzahl von Einspritzstellen, welche den Einlaßventilen der Zylinder zugeordnet sind, mit einer Mehrzahl von Kraftstoff-Injektoren (L1—L8), welche jeweils in der Nachbarschaft des Einlaßventiles eines zugeordneten Zylinders angeordnet sind und sequentiell in der Zündfolge der Zylinder betätigt werden, um der Brennkraftmaschine Kraftstoff zuzuführen; mit einem Winkelgeber (15, 19, 20), der entsprechend der Winkelstellung der Brennkraftmaschine Einspritz-Taktsignale (EPP1—8) erzeugt; mit einer Mehrzahl von Treiberschaltungen (22, 24, 26, 28), welche in Abhängigkeit von impulsbreitenmodulierten Signalen (PW1—PW4), welche die Dauer der Betätigung eines jeden Injektors vorgeben, die Injektoren betätigen; mit Treiber-Steuerkreisen (14, 16, 18, 20) die mit den Einspritz-Taktsignalen beaufschlagt sind und hieraus die impulsbreitenmodulierten Signale (PW1—PW4) für die Treiberschaltungen (22, 24, 26, 28) erzeugen und die eine Mehrzahl von Impulsgeneratoren (14, 16, 18, 20) aufweisen, nämlich für jede Treiberschaltung einen, wobei die Impulsgeneratoren (14, 16, 18, 20) die impulsbreitenmodulierten Signale (PW1—PW4) in sich wiederholender Abfolge mit einer Frequenz, welche von der Arbeitsdrehzahl der Maschine abhängt, und synchron zu den Einspritz-Taktsignalen erzeugen; mit Auswählkreisen (12, 300, 302, 304, 306), die mit den Einspritz-Taktsignalen (EPP1—8) beaufschlagt sind und in der sich wiederholenden Abfolge Auswählsignale (SEL1—SEL4) derart erzeugen, daß jedes Auswählsignal eine Zeitspanne hat, die gleich der Zeit für eine Umdrehung der Maschine ist, wodurch abwechselnd die Injektoren (L1, L5; ...; L4, L8) eines betrachteten Paares von Injektoren (L1, L5; ...; L4, L8) in aufeinanderfolgenden sich wiederholenden Abfolgen aktiviert werden; dadurch gekennzeichnet, daß jede der Treiberschaltungen (22, 24, 26, 28) abwechselnd jeden der beiden Injektoren eines Injektorpaares (L1, L5; ...; L4, L8) aktiviert und zwar einerseits in Abhängigkeit vom zugeordneten impulsbreitenmodulierten Signal (PW1—PW4) und andererseits in Abhängigkeit vom zugeordneten Auswählsignal (SEL1—SEL4), welches anzeigt, welcher Injektor des Paares für eine maximale Zeitspanne von gleich einer Maschinenumdrehung aktiviert werden soll; daß Mittel (10) zum Erzeugen eines Beschleunigungs-Anreicherungssignales (AEP), welches die gewünschte Beschleunigung wiedergibt, oder zum Erzeugen eines Start-Anreicherungssignales (CKS), welches einen Startvorgang der Maschine anzeigt, vorgesehen sind, sowie weitere Mittel (340, 342, 344, 346, 200), die mit den Einspritz-Taktsignalen (EPP1—8) beaufschlagt sind und jedes der Anreicherungssignale (AEP, CKS) zu den impulsbreitenmodulierten Signalen (PW1—PW4) hinzuaddieren, sodaß ein angereichertes impulsbreitenmoduliertes Signal erhalten wird, durch welches der Kraftstoffstrom aus den Injektoren (L1—L8) über die gewünschte Beschleunigungs- oder Startphase hinweg vergrößert wird, daß diese Mittel (10) auch eine Sperrsignal (CLR) erzeugen, welches anzeigt, daß die Maschine gefüllt ist, und daß eine Mehrzahl von Torschaltungen (30, 32, 34, 36) zwischen einem einzelnen der Impulsgeneratoren (14, 16, 18, 20) und der zugeordneten Treiberschaltung (22, 24, 26, 28) vorgesehen ist, welche Torschaltungen die zugeordneten impulsbreitenmodulierten Signale (PW1—PW4) einschlossen die angereicherten impulsbreitenmodulierten Signale ohne Verminderung zu den Treiberschaltung (22, 24, 26, 28) hindurchlaufen lassen, wenn die Torschaltung (30, 32, 34, 36) aktiviert ist, so daß jeder Kraftstoffinjektor (L1—L8) einer jeden Treiberschaltung (22, 24, 26, 28) beginnend mit dem zugeordneten impulsbreitenmodulierten Signal (PW1—PW4) und dem zugeordneten angereicherten impulsbreitenmodulierten Signal und dem Auswählsignal (SEL1—SEL4) betätigt wird, wobei seine Betätigungszeit auf eine maximale Zeitspanne ausehnbar ist, die seinem Auswählsignal äquivalent ist, so daß man einen Überlapp aufeinanderfolgender der impulsbreitenmodulierten Signale erhält, und daß die Mehrzahl von Torschaltungen (30, 32, 34, 36) gemeinsam durch das Sperrsignal (CLR) sperrbar ist.

2. System für aufeinanderfolgende Kraftstoffeinspritzung nach Anspruch 1, dadurch gekennzeichnet, daß die Mittel (10) zum Erzeugen des Beschleunigungs-Anreicherungssignales (AEP) oder des Start-Anreicherungssignales (CKS) jedes dieser Signale (AEP, CKS) als eine Serie von Hilfs-Anreicherungsimpulsen asynchron zu den impulsbreitenmodulierten Signalen (PW1—PW4) bereitstellt.

3. System für aufeinanderfolgende Kraftstoffeinspritzung nach Anspruch 1, dadurch gekennzeichnet, daß die Mittel (10) zum Erzeugen des Sperrsignales (CLR) das Sperrsignal (CLR) dann bereitstellen, wenn gleichzeitig ein Startvorgang der Brennkraftmaschine und eine weit geöffnete Drosselklappenstellung der Brennkraftmaschine vorliegt.

4. System für aufeinanderfolgende Kraftstoffeinspritzung gemäß Anspruch 1, dadurch gekennzeichnet, daß Mittel (12; 324, 326, 328, 330; 332, 334, 336, 338) vorgesehen sind, die in der sich wiederholenden Abfolge eine Mehrzahl von Rückstellsignalimpulsen (RST1—RST4) erzeugen, wobei ein jeder der Rückstellsignalimpulse (RST1—RST4) einem der beabstandeten Maschinenreignisse zugeordnet ist, und daß ein jeder Impulsgenerator (14, 16, 18, 20) sein impulsbreitenmoduliertes Signal (PW1—PW4) unabhängig von all den anderen Impulsgeneratoren erzeugt, wobei ein jeder der Impulsgeneratoren (14, 16, 18, 20) sein impulsbreitenmoduliertes Signal (PW1—PW4) dann einleitet, wenn er mit einem der Rückstellimpulse (RST1—RST4) beaufschlagt wird, und sein impulsbreitenmoduliertes Signal (PW1—PW4) dann beendet, wenn er Signale (SFS, CCC, MFS) erhält, welche gemessenen Arbeitsparameteren der Brennkraftmaschine und speziellen Kalibrierbedingungen entsprechen.

**Revendications**

1. Systèm d'injection séquentielle de carburant avec un actionnement imbriqué des injecteurs pour injecter du carburant dans un moteur à combustion interne à de multiples points d'introduction correspondant aux soupapes d'admission du moteur, ledit système comprenant: plusieurs injecteurs (L1—L8) de carburant, chacun disposé à proximité de la soupape d'admission d'un cylindre associé, ces injecteurs étant actionnés séquentiellement dans l'ordre d'allumage des cylindres pour fournir du carburant au moteur; des moyens (15, 19, 120) fonctionnant en réponse à la rotation du moteur pour engendrer des signaux (EPP1—8) de synchronisation des injections; plusieurs circuits d'attaque (22, 24, 26, 28) pour actionner les injecteurs (L1—L8) de carburant en réponse à des signaux (PW1—PW4) à largeur d'impulsion variable indiquant la durée de fonctionnement de chaque injecteur; des moyens (14, 16, 18, 20) fonctionnant en réponse aux signaux de synchronisation des injections pour engendrer les signaux (PW1—PW4) à largeur d'impulsion variable pour les circuits d'attaque (22, 24, 26, 28) et comprenant plusieurs générateurs d'impulsions (14, 16, 18, 20), un pour chaque circuit d'attaque, lesdits générateurs d'impulsions (14, 16, 18, 20) engendrant les signaux (PW1—PW4) à largeur d'impulsion variable en une séquence répétitive à une fréquence qui dépend de la vitesse de fonctionnement du moteur et en synchronisme avec les signaux de synchronisation des injections; et des moyens (12, 300, 302, 304, 306) fonctionnant en réponse aux signaux (EPP1—8) de synchronisation des injections pour engendrer des signaux de sélection (SEL1—SEL4) suivant la séquence répétitive de façon que chaque signal de sélection (SEL1—SEL4) ait une période de temps égale à la durée d'un tour du moteur pour mettre alternativement en fonction les injecteurs (L1, L5; ...L4, L8) d'une paire respective d'injecteurs (L1—L5; ...; L4, L8) pour des séquences répétitives successives, caractérisé, en ce que chacune des circuits d'attaque (22, 24, 26, 28) est conçu pour actionner alternativement l'un et l'autre des injecteurs de la paire d'injecteurs (L1, L5; ...; L4, L8) de carburant en réponse, d'une part, au signal (PW1—PW4) à largeur d'impulsion variable respectif et, d'autre part, au signal de sélection respectif (SEL1—SEL4) indiquant celui des injecteurs de la paire qui doit être actionné pendant une période de temps égale au maximum à un tour du moteur; en ce qu'il est prévu des moyens (10) pour engendrer un signal (AEP) d'enrichissement d'accélération indicatif d'une accélération désirée ou un signal (CKS) d'enrichissement de démarrage indicatif de la condition de démarrage du moteur, des moyens (340, 342, 344, 346, 200) fonctionnant en réponse aux signaux (EPP1—8) de synchronisation des injections pour ajouter l'un ou l'autre desdits signaux d'enrichissement (AEP; CKS) aux signaux (PW1—PW4) à largeur d'impulsion variable de façon à engendrer un signal à largeur d'impulsion variable enrichi pour accroître le débit de carburant fourni par les injecteurs (L1—L8) pendant la condition d'accélération ou de démarrage désirée; de tels moyens (10) engendrant également un signal (CLR) de suppression indiquant que le moteur est noyé, et plusieurs éléments de porte (30, 32, 34, 36) étant positionnés chacune enttre un générateur d'impulsions individuel (14, 16, 18, 20) et le circuit d'attaque correspondant (22, 24, 26, 28) pour transmettre sans les réduire les signaux à largeur d'impulsion variable respectifs, y compris le signal à largeur d'impulsion variable enrichi, au circuit d'attaque (22, 24, 26, 28) pendant que ledit élément de porte (30, 32, 34, 36) est passant de façon que chaque injecteur (L1—L8) de carburant de chaque circuit d'attaque (22, 24, 26, 28) soit mis en fonction au début du signal à largeur d'impulsion variable respectif (PW1—PW4) ou d'un signal à largeur d'impulsion variable enrichi respectif et du signal de sélection respectif (SEL1—SEL4) permettant à son temps d'actionnement de pouvoir être allongé jusqu'à un temps maximal équivalent à son signal de sélection, chevauchant ainsi les signaux à largeur d'impulsion variable suivants, et les divers éléments de porte (30, 32, 34, 36) étant tous mis simultanément hors fonction par le signal (CLR) de suppression.

2. Système d'injection séquentielle de carburant tel que revendiqué dans la revendication 1, caractérisé en ce que les moyens (10) servant à engendrer le signal (AEP) d'enrichissement d'accélération ou le signal (CKS) d'enrichissement de démarrage engendrent l'un et l'autre desdits signaux (AEP, CKS) sous la forme d'une série d'impulsions auxiliaires d'enrichissement asynchrones avec les signaux (PW1—PW4) à largeur d'impulsion variable.

3. Système d'injection séquentielle de carburant tel que revendiqué dans la revendication 1, caractérisé en ce que les moyens (10) servant à engendrer le signal (CLR) de suppression sont conçus pour engendrer ledit signal (CLR) de suppression lors de la coïncidence d'une condition de démarrage et d'une condition d'étrangleur grand ouvert.

4. Système d'injection séquentielle de carburant tel que revendiqué dans la revendication 1, caractérisé en ce que des moyens (12; 324, 326, 328, 330; 332, 334, 336, 338) sont prévus pour engendrer une série d'impulsions (RST1—RST4) de signaux de restauration suivant ladite séquence répétitive, chaque impulsion (RST1—RST4) des signaux de restauration correspondant à l'un des évènements de moteur espacés et en ce que chaque générateur d'impulsions (14, 16, 18, 20) engendre son signal à largeur d'impulsion variable respectif (PW1—PW4) indépendamment de tous les autres générateurs d'impulsions, chaque générateur d'impulsions (14, 16, 18, 20) commençant son signal à largeur d'impulsion variable respectif (PW1—PW4) en réponse à l'une des impulsions de restauration (RST1—RST4) et terminant son signal à largeur d'impulsion variable engendré respectif (PW1—PW4) en réponse à des signaux (SFS, CCC, MFS) qui correspondent à des paramètres de fonctionnement du moteur mesurés et à des étalonnages de conditions spéciales.

Fig-1A

0 024 233

*Fig-1B*

Fig-2

Fig-3

0 024 233

IFig-4

0 024 233

IFig-5